# EUROPÄISCHE PATENTSCHRIFT

(11) **EP 3 720 737 B1**
(45) Veröffentlichungstag und Bekanntmachung des Hinweises auf die Patenterteilung: **23.06.2021**
(21) Anmeldenummer: 18810972.2
(22) Anmeldetag: 23.11.2018
(51) Int. Cl.: B60R 13/02

(54) **VERKLEIDUNGSELEMENT ZUR VERKLEIDUNG EINER SEITENFLÄCHE EINES FAHRZEUGINNENRAUMS SOWIE FAHRZEUG**
LINING ELEMENT FOR LINING A SIDE SURFACE OF A VEHICLE INTERIOR, AND VEHICLE
ÉLÉMENT D'HABILLAGE POUR HABILLER UNE SURFACE LATÉRALE D'UN HABITACLE DE VÉHICULE AINSI QUE VÉHICULE

(30) Priorität: 06.12.2017 DE 102017222015
(43) Veröffentlichungstag der Anmeldung: 14.10.2020
(73) Patentinhaber: Volkswagen Aktiengesellschaft, 38440 Wolfsburg (DE)
(72) Erfinder: KRÖGER, Marcel, 29378 Wittingen-Radenbeck (DE)
(86) Internationale Anmeldenummer: PCT/EP2018/082458
(87) Internationale Veröffentlichungsnummer: WO 2019/110333

(56) Entgegenhaltungen:
- JP-A- 2009 220 713
- JP-A- 2013 244 863
- JP-A- 2017 043 181

## Beschreibung

Die Erfindung betrifft ein Fahrzeug mit einem Verkleidungselement zur Verkleidung einer Seitenfläche des Fahrzeuginnenraums im Bereich einer Rückenlehne einer Sitzgelegenheit, wobei das Verkleidungselement mittels zumindest eines ersten Stützelements, eines zweiten Stützelements und eines dritten Stützelements mit einer Karosseriestruktur des Fahrzeugs verbunden ist.

Typischerweise kann im Fahrbetrieb des Kraftfahrzeugs, beispielsweise beim Durchfahren von Kurven, bei Bewegungen der Passagiere oder durch Straßenunebenheiten eine Verwindung der Sitzanlage auftreten, die je nach Art der Anregung sogar zu einer Schwingung werden kann. Hierdurch kann das sogenannte "Winken" entstehen, bei dem der obere Bereich der Rücksitzanlage Bewegungen mit relativ großer Auslenkung ausführt und unter Umständen sogar gegen die Innenraumverkleidung drückt. Diese besteht im Regelfall aus Verkleidungselementen, die den Innenraum eines Fahrzeugs optisch ansprechend verkleiden sollen. Dabei soll regelmäßig ein qualitativ hochwertiger Eindruck erzeugt werden, so dass ebene Flächen und geringe sowie gleichmäßige Spaltmaße wünschenswert sind. Im Prinzip wird heutzutage der gesamte für den Benutzer sichtbare Innenraum des Fahrzeugs mit Verkleidungselementen abgedeckt. Die Verkleidungselemente folgen dabei der Form der Karosserie und sind an den meisten Stellen während des Fahrtbetriebs keinen größeren Kräften ausgesetzt.

Gemäß dem Stand der Technik wird versucht, das "Winken" der Rücksitzanlage zu vermeiden, indem die Steifigkeit der Hintersitzanlage erhöht wird, um Eigenschwingungen und Toleranzen zu minimieren. Eine solche Versteifung der Hintersitzanlage ist jedoch in nachteiliger Weise mit Zusatzkosten und gegebenenfalls höherem Gewicht verbunden. Eine weitere Möglichkeit ist es, einen relativ großen Sicherheitsabstand zwischen der Hintersitzanlage und den Verkleidungselementen vorzusehen, so dass auch bei einer Verwindung der Hintersitzanlage kein Kontakt zwischen der Rückenlehne und dem Seitenteil der Innenraumverkleidung entsteht. Durch eine solche Ausgestaltung wird allerdings der zur Verfügung stehende Innenraum des Fahrzeugs nicht optimal ausgenutzt, und es kann ein qualitativ minderwertigerer Eindruck für den Benutzer entstehen, da relativ große Spalte bzw. Hohlräume zu sehen sind.

Die gattungsbildende JP 2017 043181 A zeigt eine Crashenergie-Absorptionsanordnung im Bereich einer D-Säulen-Verkleidung eines Fahrzeugs.

Es ist die Aufgabe der vorliegenden Erfindung, eine Möglichkeit bereitzustellen, auf konstruktiv einfache und kostengünstige Art und Weise die Auslenkung einer Sitzanlage, insbesondere einer Hintersitzanlage, in einem Fahrzeug quer zur Fahrtrichtung derart zu begrenzen, dass ein möglichst hochwertiger qualitativer und komfortabler Eindruck für einen Benutzer entsteht.

Die Erfindung löst die Aufgabe durch ein gattungsgemäßes Fahrzeug mit einem Verkleidungselement, bei dem die drei Stützelemente ein Dreieck aufspannen, und das in einem Bereich zwischen den drei Stützelementen eine Verstärkungsstruktur aufweist, wobei in einer Projektion der Rückenlehne auf das Verkleidungselement die obere Seite der Rückenlehne zumindest teilweise in dem Dreieck verläuft.

Durch die Verstärkungsstruktur ergibt sich eine das Verkleidungselement versteifende Wirkung. Eine Verformung des Verkleidungselements bei einer Krafteinleitung durch die Rückenlehne kann somit entweder ganz vermieden oder zumindest stark vermindert werden. Die erfindungsgemäße Ausgestaltung bewirkt somit eine steife Krafteinleitungsfläche. Die Abführung der eingeleiteten Kraft kann dann über die Verstärkungsstruktur und die Stützelemente in den Rohbau, was in der Regel die Karosseriestruktur ist, erfolgen. Es wird so eine plastische Verformung des Verkleidungselements vermieden bzw. zumindest minimiert. Die hintere Sitzanlage kann somit über die Komprimierung des Lehnenschaums sowie die steifere Verkleidung, zum Beispiel in Form einer Radhausverkleidung, in ihrer Schwingung gedämpft werden. Dies bewirkt einen erhöhten Komfort und ein qualitativ hochwertiger anmutendes Fahrzeug, da die Schwingung der Hintersitzanlage reduziert wird und somit der Passagier einen hochwertigen Eindruck von dem Fahrzeug erhält, da jede Art von Verwindung in der Regel als Zeichen von minderwertiger Ausführung gedeutet wird.

Die Stützelemente sind an sich bekannt und werden oft auch als Retainer bezeichnet. Es handelt sich dabei im Normalfall um angespritzte Körper aus Kunststoff, mit denen die Befestigung des Verkleidungselements an der Karosserie gewährleistet wird. Die Befestigung an der Karosserie kann dabei auf direktem oder indirektem Wege hergestellt werden. Mit anderen Worten können die Stützelemente auch an weiteren Elementen befestigt sein, die wiederum an der Karosserie befestigt sein können. Ein solches weiteres Element kann beispielsweise auch ein weiteres Verkleidungselement sein.

In einer typischen Ausführungsform ist das Sitzelement im Fond des Fahrzeugs angeordnet. Hier ist oftmals die typische Konstellation anzutreffen, in der durch die Winkbewegung der Hintersitzanlage Kräfte in die Innenraumverkleidung eingeleitet werden. Beim Fahrer- und Beifahrersitz hingegen ist der Abstand zur Karosserie bzw. zur B-Säule meistens so groß, dass ohnehin kein Kontakt der Sitzanlage mit den benachbarten Verkleidungselementen stattfindet. Darüber hinaus ist die Steifigkeit bei einem Einzelsitz gegenüber einer Sitzanlage mit mehreren nebeneinander liegenden Sitzen, wie sie typischerweise im Fond eines Fahrzeugs eingesetzt wird, deutlich erhöht.

Das Fahrzeug mit dem Verkleidungselement ist derart ausgestaltet, dass in einer Projektion der Rückenlehne auf das Verkleidungselement die obere Seite der Rückenlehne zumindest teilweise in dem Dreieck verläuft. Da die Winkbewegung der hinteren Sitzanlage einer Drehbewegung um die Verbindungspunkte der Hintersitzanlage mit dem Fahrzeugboden entspricht, ist die Auslenkung am oberen Ende der Lehne am größten, sodass an dieser Stelle die größte Kraft in das Verkleidungselement eingeleitet wird. Es ist daher sinnvoll, die Verstärkungsstruktur zumindest teilweise oder vollständig im Bereich der oberen Kante der Rückenlehne anzuordnen. Unter einer Projektion der Rückenlehne auf das Verkleidungselement wird dabei eine Projektion in Querrichtung des Fahrzeugs, also horizontal und senkrecht zur Längsachse bzw. Fahrtrichtung des Fahrzeugs, verstanden.

Gemäß einer bevorzugten Ausführungsform ist das Verkleidungselement als Verkleidungselement für eine B-Säule oder eine C-Säule eines Fahrzeugs ausgestaltet. Eine solche Säulenverkleidung besteht herkömmlich meist aus einem dünnen, weitgehend ebenen Kunststoffelement und übernimmt lediglich eine optische Funktion. Durch die hier beschriebene Säulenverkleidung können aber Kräfte, die im normalen Fahrbetrieb durch Verwindungen einer Sitzanlage, insbesondere einer Hintersitzanlage, entstehen, von dem Verkleidungselement aufgenommen und über die Stützelemente in den Karosserierohbau eingeleitet werden. Mit anderen Worten kann sich die Sitzanlage mit einer seitlichen oberen Kante oder dem oberen Bereich ihrer äußeren Seitenfläche an dem Verkleidungselement abstützen. Die Sitzanlage führt dann evtl. noch kleinere Pendelbewegungen um die Fahrzeuglängsachse aus, diese weisen aber eine im Vergleich zu einer gleichartigen Konstruktion, bei der sich die Sitzanlage nicht an dem Verkleidungselement abstützt, eine deutlich kleinere Amplitude auf. Die Sitzanlage wird so stabilisiert und der Komfort für die Fahrzeuginsassen erhöht. Ein herkömmliches Verkleidungselement wäre hingegen nicht in der Lage, solche Kräfte aufzunehmen und würde beschädigt oder zerstört werden, wenn die Sitzanlage die entsprechende Kraft senkrecht zur Oberfläche des Verkleidungselements ausübt.

Alternativ kann gemäß dem Stand der Technik der Abstand in Fahrzeugquerrichtung zwischen der Außenseite der Sitzanlage und dem Verkleidungselement erhöht werden, so dass ein relativ großer freier Bereich vorhanden ist, in den die Sitzanlage ausgelenkt werden kann, ohne in Kontakt mit dem Verkleidungselement zu kommen. Es wird auf diese Weise aber an sich nutzbarer Raum in dem Fahrzeug verschenkt, und die Pendelbewegungen der Sitzanlage werden von Benutzern als störend empfunden. Eine weitere Alternative gemäß dem Stand der Technik ist es, die Sitzanlage zu verstärken, so dass die aufzunehmenden Kräfte über die Befestigungselemente der Sitzanlage nach unten in den Karosserieboden geleitet werden. Eine solche Verstärkung ist aber gegenüber dem Einsatz eines erfindungsgemäßen Verkleidungselements aufwendiger und mit erhöhtem Gewicht sowie erhöhten Kosten verbunden.

Gemäß einer Weiterbildung der Erfindung erstreckt sich die Verstärkungsstruktur zumindest teilweise in einer von den drei Stützelementen aufgespannten Ebene. Es wird so ein besonders effizienter Kraftfluss vom Krafteinleitungspunkt, der, abgesehen von einem durch die Dicke des Verkleidungselements bedingten Versatz von typisch weniger als 1 cm senkrecht zur von den drei Stützelementen aufgespannten Ebene, innerhalb der Fläche des von den drei Stützelementen aufgespannten Dreiecks liegt, zu den Stützelementen und in die Karosserie bzw. in den Rohbau hinein ermöglicht.

Die Verstärkungsstruktur ist vorteilhafterweise derart ausgestaltet, dass die von dem Verkleidungselement senkrecht zu einer inneren Oberfläche des Verkleidungselements elastisch aufnehmbare Kraft vergrößert wird. Hierbei ist zu beachten, dass anders als im Stand der Technik bei verschiedenen verstärkten Fahrzeugbauteilen das Verkleidungselement in der Lage sein soll, elastische Verformungen durchzuführen. Es soll also gerade nicht bei einem Unfall Energie durch plastische Verformungen aufgenommen werden, sondern es soll eine Gegenkraft senkrecht zur Oberfläche des Verkleidungselements aufgebaut werden, um auf das Verkleidungselement wirkende Kräfte zu kompensieren und Elemente wie beispielsweise eine Rückenlehne einer Sitzanlage, die in bestimmten Fahrsituationen dynamisch auf das Verkleidungselement drücken, zu stabilisieren.

Eine kostengünstige Ausführung ergibt sich, wenn die Verstärkungsstruktur integral in Form einer dreidimensionalen Struktur Teil des Verkleidungselements ausgeführt ist. Es ist dann nur ein einzelnes Bauteil notwendig, das aus Kunststoff gefertigt sein kann und in dessen Form die Verstärkungsstruktur, beispielsweise durch Materialzugaben an geeigneten Stellen, integriert sein kann. Es entsteht mit Ausnahme der Konstruktion und Herstellung des Verkleidungselements somit kein zusätzlicher Aufwand bei der Herstellung des Fahrzeugs.

Die Verstärkungsstruktur kann ein sich periodisch wiederholendes Muster bilden. Eine solche Verstärkungsstruktur ist einfach herzustellen und verfügt bei geeigneter Ausgestaltung über eine ausreichende Versteifungswirkung. Gleichzeitig wird so eine kostengünstige Produktion des erfindungsgemäßen Verkleidungselements möglich.

Eine solche periodische Verstärkungsstruktur kann z.B. Waben, Rippen und/oder eine Gitterstruktur aufweisen. Die Art der periodischen Verstärkungsstruktur wird dabei in der Praxis im Regelfall durch einen Kompromiss aus benötigter Steifigkeit, Herstellungskosten und anderer Parameter, wie zum Beispiel dem zur Verfügung stehenden Bauraum bestimmt. Relevant ist dabei beispielsweise auch, ob gewünscht wird, dass das Verkleidungselement in mehreren Richtungen versteift wird, oder ob es ausreichend ist, wenn die Steifigkeit in einer Richtung erhöht wird. In diesem Fall wären zum Beispiel Rippen als Verstärkungsstruktur ausreichend, wohingegen in den anspruchsvolleren Fällen ein Gitter oder Wabenmuster Vorteile aufweist. Der Abstand der einzelnen Elemente der Verstärkungsstruktur, also beispielsweise der Durchmesser der Waben oder der Abstand der Rippen zueinander, kann beispielsweise 0,5 - 3 cm, vorzugsweise 1 - 2 cm betragen. Die Stärke der Verstärkungsstruktur ergibt sich aus den Anforderungen der Spritzgusstechnik zur Vermeidung von Einfallstellen auf der Sichtseite und kann beispielsweise zwischen 0,5 mm und 1,2 mm liegen. Mit anderen Worten ist dann im Bereich der Verstärkungsstruktur eine zusätzliche Materialmenge, die einer zusätzlichen Dicke des Verkleidungselements von 0,5 mm bis 1,2 mm entspricht, vorhanden. Das Verkleidungselement kann dadurch an den Stellen, an denen die Verstärkungsstruktur vorhanden ist, etwa doppelt oder dreifach so dick sein, wie an den Stellen, an denen keine Verstärkungsstruktur vorhanden ist.

In einer bevorzugten Ausführungsform befindet sich das erste Stützelement in Fahrtrichtung gesehen vor der Rückenlehne, und das zweite Stützelement und das dritte Stützelement befinden sich in Fahrtrichtung gesehen hinter der Rückenlehne. Diese Ausgestaltung trägt einer typischen Konfiguration bzw. den typischen Platzverhältnissen in einem Pkw Rechnung und ist somit an eine in der Praxis oftmals auftretende Situation angepasst. In einer alternativen Ausführungsform können eines der Stützelemente, zwei der drei Stützelemente oder auch alle drei Stützelemente im Bereich der Rückenlehne angeordnet sein. Dies entspricht dann einem relativ geringen Abstand der einzelnen Stützelemente voneinander, dessen Anteil in Fahrtrichtung gesehen jeweils geringer als die Dicke der Rückenlehne ist. Mit anderen Worten befinden sich dann ein Stützelement, zwei Stützelemente oder alle drei Stützelemente, die das Dreieck bilden, innerhalb der Projektion der Rückenlehne quer zur Fahrtrichtung auf das Verkleidungselement.

In einer Vielzahl der Fälle ist es ausreichend, wenn das Verkleidungselement mittels genau drei Stützelementen mit der Karosseriestruktur des Fahrzeugs verbunden ist, wobei das dritte Stützelement in Fahrtrichtung gesehen hinter der Rückenlehne in einer von der Höhe des zweiten Stützelements verschiedenen Höhe angeordnet ist. Ein viertes Stützelement oder gar noch mehr Stützelemente werden dann nicht benötigt, was eine kostengünstige Herstellung sowie einen relativ geringen Montageaufwand ermöglicht.

Eine vorteilhafte Ausgestaltung der Erfindung sieht vor, dass die Verstärkungsstruktur eine Versteifung des Verkleidungselements in einer Richtung von in Fahrtrichtung gesehen vorne-oben nach hinten-unten bewirkt. Diese Richtung ist oftmals die Richtung, entlang der sich in der Praxis einer Verformung des Verkleidungselements zeigt, da in Richtung der hinteren Türen oftmals eine Kante des Verkleidungselements liegt, die bei einer Verformung des Verkleidungselements in die angesprochene Richtung zu einem sichtbaren Spalt führen kann, was durch die beschriebene Ausgestaltung zuverlässig vermieden werden kann.

Eine kostengünstige und gleichzeitig zweckmäßige Ausgestaltung des erfindungsgemäßen Verkleidungselements zeichnet sich dadurch aus, dass die Verstärkungsstruktur aus Rippen besteht, die im ins Fahrzeug eingebauten Zustand mit der Horizontalen einen Winkel zwischen 30° und 60°, vorzugsweise zwischen 40° und 50° bilden. Die versteifende Wirkung tritt dabei hauptsächlich Biegekräften um eine Achse senkrecht zu den Rippen entgegen.

In einer speziellen Ausgestaltung ist das erste Stützelement direkt mit der Karosseriestruktur verbunden. Mit anderen Worten ist direkt an der Karosseriestruktur eine Aufnahmevorrichtung bzw. ein Verbindungselement angeordnet, mit der bzw. mit dem das erste Stützelement verbunden werden kann. Insbesondere kann diese Aufnahmevorrichtung bzw. dieses Verbindungselement aus Metall bestehen. Das Verkleidungselement stützt sich somit direkt an der außerordentlich steifen Karosseriestruktur ab, was Vorteile gegenüber einer Verbindung über weitere Bauteile, wie zum Beispiel ein weiteres Verkleidungselement bietet. Es ist möglich, dass sich auch das zweite und/oder das dritte Stützelement direkt an der Karosseriestruktur abstützen.

Für eine einfache Montage ist es vorteilhaft, wenn die Stützelemente mit der Karosseriestruktur und/oder einem weiteren Verkleidungselement oder mehreren weiteren Verkleidungselementen verclipst werden können. Da das Verkleidungselement im Regelfall aus Kunststoff besteht, ist eine solche Ausgestaltung sehr einfach herstellbar. Andere Befestigungsmöglichkeiten, wie zum Beispiel eine Verschraubung, Vernietung oder Verklebung sind aber ebenfalls denkbar.

In einer bevorzugten Ausgestaltung der Erfindung beträgt der Abstand zwischen zwei Stützelementen jeweils zwischen 70 mm und 200 mm, vorzugsweise zwischen 90 mm und 150 mm und besonders bevorzugt zwischen 100 mm und 140 mm. Diese Dimensionen sind auf typische Größen von Rückenlehnen einer Hintersitzanlage abgestimmt, so dass sich eine effektive Verwendung der erfindungsgemäßen Idee darstellen lässt. Insbesondere gelten diese Abstände für die Stützelemente, die das Dreieck bilden, beispielsweise in einer Ausführungsform, die genau drei Stützelemente aufweist.

Ebenso ist es zweckmäßig, wenn die Verstärkungsstruktur Im oberen Bereich der Rückenlehne/im Bereich des oberen Drittels der Rückenlehne angeordnet ist, da dort regelmäßig die größten Kräfte eingeleitet werden.

Ein erfindungsgemäßes Fahrzeug mit einem Verkleidungselement weist wie bereits beschrieben eine verwindungsarme Sitzanlage, insbesondere eine verwindungsarme Hintersitzanlage, auf und vermittelt so ein komfortables Fahrgefühl.

Dabei ist mit Vorteil vorgesehen, dass eine durch eine Querbeschleunigung des Fahrzeugs und/oder durch Stöße während der Fahrt verursachte Winkbewegung der Rückenlehne bzw. eine Verwindung der Sitzgelegenheit durch eine Kraftübertragung zwischen der Rückenlehne der Sitzgelegenheit und dem Verkleidungselement verringert wird. Die Sitzgelegenheit und das Verkleidungselement sind dabei vorzugsweise derart aufeinander abgestimmt, dass die beispielsweise bei einem Stoß oder einer schnell durchfahrenen Kurve auftretenden Kräfte bzw. Drehmomente, die zu einer Neigung der Sitzanlage quer zur Fahrzeuglängsachse führen, teilweise über die Verankerung der Sitzanlage am Fahrzeugboden in den Fahrzeugboden und teilweise über das Verkleidungselement in die Karosserie abgeleitet werden. Die Sitzgelegenheit kann auch als Sitzanlage bezeichnet werden und beispielsweise eine Hintersitzanlage sein.

Das Fahrzeug kann derart ausgestaltet sein, dass die Verstärkungsstruktur des Verkleidungselements den Bereich abdeckt, in dem eine Seitenfläche einer Rückenlehne einer Sitzgelegenheit im Fahrbetrieb mit dem Verkleidungselement in Berührung kommen kann. In dem beschriebenen Kontaktbereich weist das Verkleidungselement also eine Verstärkungsstruktur auf. Es kann weiterhin vorgesehen sein, dass außerhalb des beschriebenen Kontaktbereichs keine Verstärkungsstruktur vorhanden ist. Da der Kontaktbereich schwierig zu definieren ist, kann näherungsweise davon ausgegangen werden, dass keine Teile der Verstärkungsstruktur beispielsweise weiter als 10 cm, bevorzugt nicht weiter als 5 cm von der äußeren Oberkante der Rückenlehne der Sitzgelegenheit entfernt angeordnet sind.

Um die mögliche Auslenkung der Rückenlehne quer zur Fahrtrichtung möglichst klein zu halten, kann ein Abstand quer zur Fahrtrichtung zwischen der Rückenlehne der Sitzgelegenheit und dem Verkleidungselement im Ruhezustand möglichst klein ausgestaltet sein, beispielsweise kleiner als 8 mm, bevorzugt kleiner als 5 mm und besonders bevorzugt kleiner als 3 mm.

Ausführungsbeispiele der Erfindung werden anhand der Zeichnungen und der nachfolgenden Beschreibung näher erläutert. Es zeigen:
Fig. 1: eine Seitenansicht als Überblick,
Fig. 2: eine erste Ausführungsform eines erfindungsgemäßen Verkleidungselements im Zusammenspiel mit weiteren Verkleidungselementen,
Fig. 3: eine vergrößerte Darstellung eines Ausschnitts aus Fig. 2,
Fig. 4: eine zweite Ausführungsform eines erfindungsgemäßen Verkleidungselements in einer Darstellung analog zu Fig. 2,
Fig. 5: eine schematische Darstellung zur Veranschaulichung der durchgeführten Berechnungen,
Fig. 6: ein Diagramm, das auf Grundlage der Simulation der Verformung des Verkleidungselements bei Krafteinleitung an zwei verschiedenen Orten erstellt wurde,
Fig. 7: eine perspektivische Darstellung eines dritten Ausführungsbeispiels eines erfindungsgemäßen Verkleidungselements, und
Fig. 8: eine weitere perspektivische Darstellung des Ausführungsbeispiels Verkleidungselement aus Fig. 7.

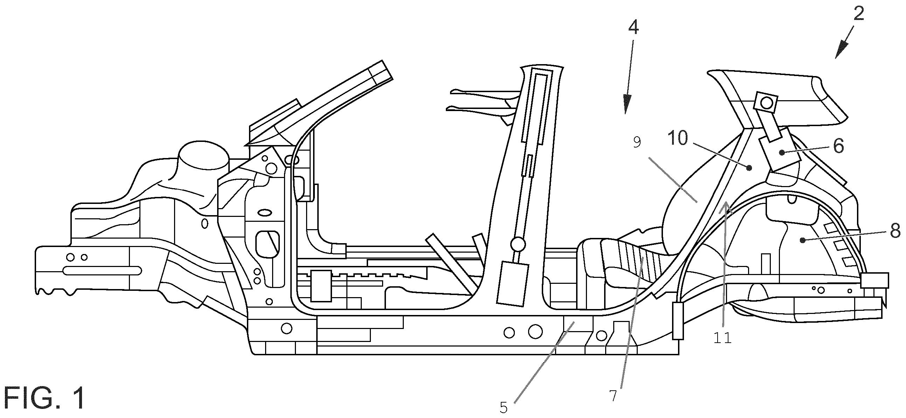

Figur 1 zeigt eine Seitenansicht eines Karosserierohbaus eines Kraftfahrzeugs 2. Zu erkennen sind insbesondere der Ausschnitt für die hintere Tür 4, die Gurtanlage 6, der hintere Radkasten 8 sowie das in den folgenden Figuren näher beschriebene Ausführungsbeispiel eines erfindungsgemäßen Verkleidungselements 10, das Teile der C-Säule 11 verkleidet. Das Verkleidungselement 10 schließt also den Innenraum des Kraftfahrzeugs 2 im Bereich hinter der hinteren Tür 4 nach innen hin ab. Es ist aus Kunststoff hergestellt und reicht im dargestellten Ausführungsbeispiel bis in den Bereich des Sitzkissens der Hintersitzanlage 7 hinab. Weiterhin ist die Rückenlehne 9 der Hintersitzanlage 7 zu erkennen. Die Hintersitzanlage 7 ist über Befestigungspunkte oder Befestigungsschienen an dem Fahrzeugboden 5 befestigt.

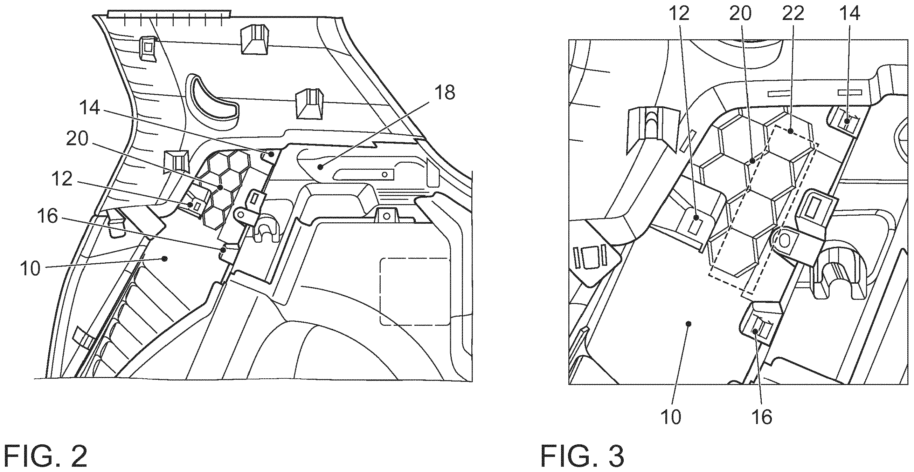

Figur 2 zeigt das Verkleidungselement 10 in einer vergrößerten Darstellung. Es ist das in Fahrtrichtung gesehen linke Verkleidungselement 10 in einer Seitenansicht gezeigt, so dass die vom Fahrzeuginnenraum weg und zur Karosserie hin zeigende Seite des Verkleidungselements 10 sichtbar ist. Das Verkleidungselement 10 ist mithilfe von dem ersten Stützelement 12, dem zweiten Stützelement 14 und dem dritten Stützelement 16 mit der nicht dargestellten Karosserie des Kraftfahrzeugs 2 verbunden. Dabei ist das erste Stützelement 12 direkt an der Karosserie des Kraftfahrzeugs 2 befestigt. Die Verbindung kann beispielsweise eine Verschraubung oder eine Verclipsung sein. Das zweite Stützelement 14 und das dritte Stützelement 16 sind hingegen nicht direkt mit der Karosserie des Kraftfahrzeugs 2 verbunden, sondern sind an dem weiteren Verkleidungselement 18 befestigt. Im dargestellten Fall ist die Verbindung zwischen dem zweiten Stützelement 14, dem dritten Stützelement 16 und dem weiteren Verkleidungselement 18 durch Clipsverbindungen realisiert. Auch das zweite Stützelement 14 und das dritte Stützelement 16 stützen sich aber an der Karosseriestruktur ab, so dass auch über diese Stützelemente 14, 16 Kräfte abgeleitet werden können, ohne dass diese Kräfte von einem weiteren Verkleidungselement aufgenommen werden müssen.

Figur 3 zeigt einen nochmals vergrößerten Ausschnitt aus Figur 2. Zu erkennen ist der obere Teil des Verkleidungselements 10 sowie die drei Stützelemente 12, 14 und 16. Die drei Stützelemente 12, 14 und 16 spannen ein ebenes Dreieck auf. Innerhalb dieses Dreiecks ist die Verstärkungsstruktur 20 angeordnet. Im dargestellten Ausführungsbeispiel ist die Verstärkungsstruktur 20 wabenförmig. Die Verstärkungsstruktur 20 besteht aus in einer Wabenstruktur angeordneten Kunststoffstegen, die einstückig mit dem Verkleidungselement 10 ausgeführt sind. Es handelt sich also um ein einzelnes, integral gefertigtes Bauteil. Prinzipiell ist es zwar auch denkbar, die Verstärkungsstruktur 20 als separates Bauteil auszuführen und in der Folge mit dem Verkleidungselement 10 zu verbinden, allerdings ist es vorteilhaft, die Verstärkungsstruktur 20 in das Verkleidungselement 10 von vornherein zu integrieren, da sich so eine einfache Herstellungsweise und eine besonders feste Verbindung zwischen der Verstärkungsstruktur 20 und dem Verkleidungselement 10 ergibt. Im Vergleich zu der eingesetzten Materialmenge und zu den anfallenden Produktionskosten ergibt sich so eine sehr gute Steifigkeit des Verkleidungselements 10.

Die Stützelemente 12, 14 und 16 können ebenfalls einstückig mit dem Verkleidungselement 10 ausgeführt sein. Im dargestellten Ausführungsbeispiel füllt die Verstärkungsstruktur 20 nicht die komplette Fläche des von den Stützelementen 12, 14 und 16 gebildeten Dreiecks aus, jedoch mehr als die Hälfte dieser Fläche. Es ist auch möglich, die vollständige Fläche zwischen den Stützelementen 12, 14 und 16 mit der Verstärkungsstruktur 20 zu versehen, oder diese noch darüber hinaus auszuweiten. Als gestrichelte Linie 22 ist ein Bereich eingezeichnet, in dem ein Kontakt zwischen dem Verkleidungselement 10 und der Rückenlehne der Hintersitzanlage des Kraftfahrzeugs möglich ist. An dieser Stelle wirkt also durch die Neigebewegung der Hintersitzanlage eine Kraft auf das Verkleidungselement 10, welche mithilfe der Verstärkungsstruktur 20 über die Stützelemente 12, 14 und 16 in die Karosseriestruktur abgeleitet wird. Im dargestellten Ausführungsbeispiel ist zweckmäßigerweise der überwiegende Teil des Bereichs 22 mit der Verstärkungsstruktur 20 ausgefüllt.

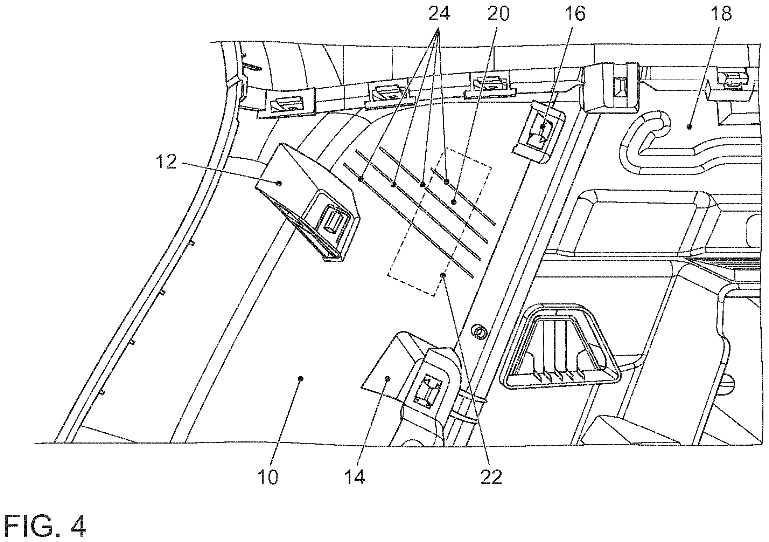

Figur 4 zeigt eine Darstellung eines zweiten Ausführungsbeispiels eines erfindungsgemäßen Verkleidungselements 10 analog zu der in Figur 3 gezeigten Darstellung. Zu erkennen sind wiederum das erste Stützelement 12, das zweite Stützelement 14 und das dritte Stützelement 16. Das gezeigte Ausführungsbeispiel unterscheidet sich von dem in Figur 3 gezeigten Ausführungsbeispiel im Wesentlichen dadurch, dass die Verstärkungsstruktur 20 nicht als Wabenstruktur, sondern als Rippenstruktur ausgeführt ist. Im dargestellten Ausführungsbeispiel besteht die Verstärkungsstruktur aus vier parallel verlaufenden Rippen 24. Die Rippen 24 sind dabei wieder als durch eine lokale Verstärkung des Materials des Verkleidungselements 10 erzeugte Stege ausgeführt, die das Verstärkungselement insbesondere entlang der Längsrichtung der Rippen 24 versteifen. Die Rippen 24 sind in einem Abstand von etwa 1 cm zueinander angeordnet. Ebenfalls dargestellt ist in Figur 4 auch der Bereich 22, in den die Kraft durch die Rückenlehne eingeleitet wird.

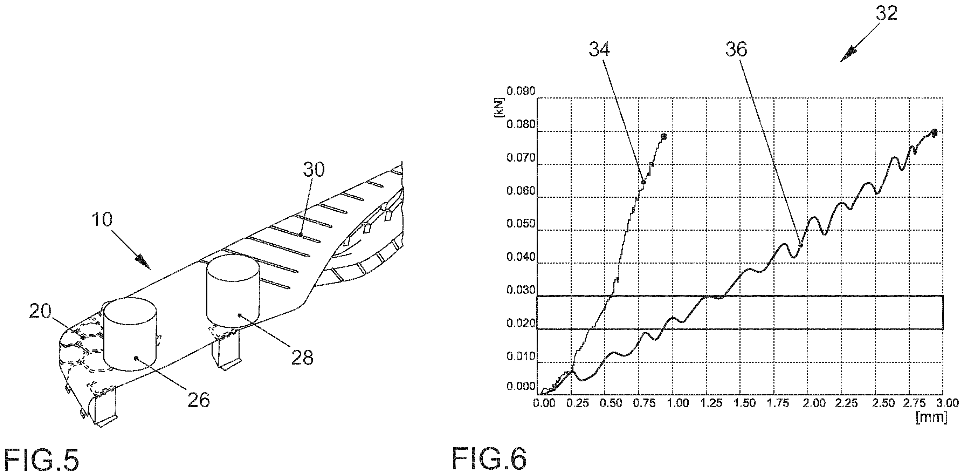

Die folgenden Figuren beschäftigen sich mit von den Erfindern durchgeführten Simulationen des Verformungsverhaltens des erfindungsgemäßen Verkleidungselements bei einer Krafteinleitung, wie sie ähnlich in der Praxis zu erwarten ist. Figur 5 zeigt ein Verkleidungselement 10, auf das in Form zweier zylindrischer Stempel 26, 28 eine Kraft wirkt. Das Verkleidungselement 10 ist dabei in einer Ansicht von schräg oben dargestellt, wobei die zum Innenraum des Kraftfahrzeugs weisende Seite sichtbar ist. Die in den vorigen Figuren rechts oben liegende Ecke des Verkleidungselements 10 ist in dieser Figur links unten zu erkennen. Schematisch dargestellt ist weiterhin die Verstärkungsstruktur 20, die in Form einer Wabenstruktur auf der unten liegenden Seite des Verkleidungselements 10 angeordnet ist. Ebenfalls zu erkennen sind das zweite Stützelement 14 und das dritte Stützelement 16. Im rechten oberen Bereich der Figur ist darüber hinaus eine weitere Verstärkungsstruktur 30 gezeigt, die in einem Bereich außerhalb des von den drei Stützelementen 12, 14 und 16 aufgespannt Dreiecks liegt. Diese Verstärkungsstruktur 30 ist als Verrippung ausgeführt.

In der Simulation wurde nun kontinuierlich die mittels der beiden Stempel 26, 28 eingeleitete Kraft erhöht. Das Ergebnis der Berechnungen ist in Figur 6 als Weg-Kraft-Diagramm 32 dargestellt. Auf der x-Achse ist dabei der Stempelweg in Millimetern aufgetragen, und auf der y-Achse ist die von dem jeweiligen Stempel 26, 28 eingeleitete Kraft in kN aufgetragen. Die Kurve 34 gehört dabei zu dem ersten Stempel 26, wohingegen die Kurve 36 zu dem zweiten Stempel 28 gehört. Der erste Stempel 26 leitet dabei eine Kraft in das Bauteil 10 ein, die vergleichbar mit der zu erwartenden von der Rückenlehne verursachten Kraft ist, wohingegen der zweite Stempel 28 auf einen Bereich des Verkleidungselements 10 drückt, in dem nur mit geringen Krafteinleitungen durch die Rückenlehne zu rechnen ist.

In der Praxis ist mit Kräften im Bereich von maximal 20-30 N zu rechnen. Das in Figur 6 dargestellte Diagramm zeigt, dass bei Kräften dieser Größenordnung für den ersten Stempel 26 Verformungen im Bereich um 0,5 mm zu erwarten sind, was in der Praxis weder ein Risiko für die Stabilität des Verkleidungselements 10 darstellt, noch von einem Passagier als störend empfunden wird. Im Bereich des zweiten Stempels 28 sind die Verformungen mit bis zu etwa 1,25 mm deutlich größer, aber immer noch in einem tolerablen Bereich.

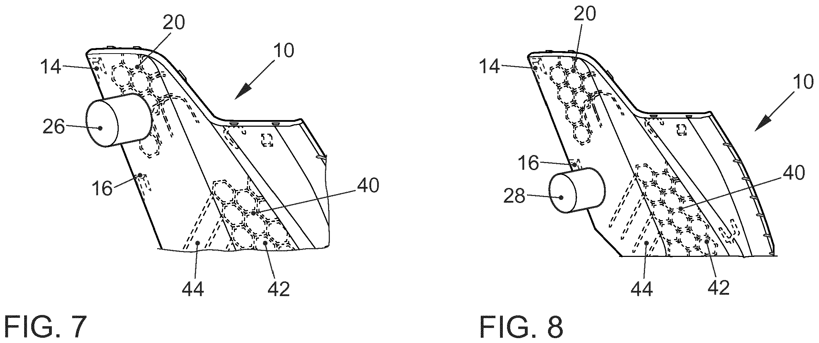

Figur 7 zeigt eine perspektivische Darstellung eines dritten Ausführungsbeispiels eines erfindungsgemäßen Verkleidungselements 10, welches im Wesentlichen dem in Figur Ziffer 3 dargestellten Verkleidungselement 10 entspricht. Allerdings ist hier, wie im unteren rechten Bereich der Figur zu erkennen ist, eine weitere Verstärkungsstruktur 40 vorhanden, die in dem im Wesentlichen senkrecht zur Seitenfläche es Fahrzeugs stehenden Bereich 42 des Verkleidungselements 10 als Wabenstruktur ausgeführt ist und in dem parallel zur Seitenfläche des Fahrzeugs stehenden Bereich 44 in eine Rippenstruktur übergeht. Ebenfalls dargestellt ist der erste Stempel 26.

Figur 8 zeigt das Verkleidungselement 10 aus Figur 7 sowie den zweiten Stempel 28. Die weitere Verstärkungsstruktur 40 ist geeignet, um insbesondere auch Kräfte, die in den Bereich, auf den der zweite Stempel 28 wirkt, eingeleitet werden, zu kompensieren und eine stärkere Verformung des Verkleidungselements 10 zu vermeiden.

### Bezugszeichenliste

- 2: Kraftfahrzeug
- 4: hintere Tür
- 5: Fahrzeugboden
- 6: Gurtanlage
- 7: Hintersitzanlage
- 8: hinterer Radkasten
- 9: Rückenlehne
- 10: Verkleidungselement
- 11: C-Säule
- 12: erstes Stützelement
- 14: zweites Stützelement
- 16: drittes Stützelement
- 18: weiteres Verkleidungselement
- 20: Verstärkungsstruktur
- 22: Kontaktbereich
- 24: Rippen
- 26: erster Stempel
- 28: zweiter Stempel
- 30: Verstärkungsstruktur
- 32: Diagramm
- 34: erste Kurve
- 36: zweite Kurve
- 40: Verstärkungsstruktur
- 42: senkrechter Bereich
- 44: paralleler Bereich

## Patentansprüche

1. Fahrzeug (2) mit einem Verkleidungselement (10) zur Verkleidung einer Seitenfläche des Fahrzeuginnenraums im Bereich einer Rückenlehne (9) einer Sitzgelegenheit (7), wobei das Verkleidungselement (10) mittels zumindest eines ersten Stützelements (12), eines zweiten Stützelements (14) und eines dritten Stützelements (16) mit einer Karosseriestruktur des Fahrzeugs (2) verbunden ist, wobei die drei Stützelemente (12, 14, 16) ein Dreieck aufspannen und das Verkleidungselement (10) in einem Bereich zwischen den drei Stützelementen (12, 14, 16) eine Verstärkungsstruktur (20) aufweist, **dadurch gekennzeichnet, dass** in einer Projektion der Rückenlehne (9) auf das Verkleidungselement (10) die obere Seite der Rückenlehne (9) zumindest teilweise in dem Dreieck verläuft.

2. Fahrzeug (2) nach dem vorstehenden Anspruch, **dadurch gekennzeichnet, dass** das Verkleidungselement (10) als Verkleidungselement (10) für eine B-Säule oder eine C-Säule (11) des Fahrzeugs ausgestaltet ist.

3. Fahrzeug (2) nach einem der vorstehenden Ansprüche, **dadurch gekennzeichnet, dass** die Verstärkungsstruktur (20) sich zumindest teilweise in einer von den drei Stützelementen (12, 14, 16) aufgespannten Ebene erstreckt.

4. Fahrzeug (2) nach einem der vorstehenden Ansprüche, **dadurch gekennzeichnet, dass** die Verstärkungsstruktur (20) ausgestaltet ist, um die von dem Verkleidungselement (10) senkrecht zu einer inneren Oberfläche des Verkleidungselements (10) elastisch aufnehmbare Kraft zu vergrößern.

5. Fahrzeug (2) nach einem der vorstehenden Ansprüche, **dadurch gekennzeichnet, dass** die Verstärkungsstruktur (20) Waben und/oder Rippen (24) und/oder eine Gitterstruktur aufweist.

6. Fahrzeug (2) nach einem der vorstehenden Ansprüche, **dadurch gekennzeichnet, dass** die Verstärkungsstruktur (20) eine Versteifung des Verkleidungselements (10) in einer Richtung von in Fahrtrichtung gesehen vorne-oben nach hinten-unten bewirkt.

7. Fahrzeug (2) nach einem der vorstehenden Ansprüche, **dadurch gekennzeichnet, dass** die Verstärkungsstruktur aus Rippen (24) besteht, die im ins Fahrzeug (2) eingebauten Zustand mit der Horizontalen einen Winkel zwischen 30° und 60°, vorzugsweise zwischen 40° und 50°, bilden.

8. Fahrzeug (2) nach einem der vorstehenden Ansprüche, **dadurch gekennzeichnet, dass** eine durch eine Querbeschleunigung des Fahrzeugs (2) und/oder durch Stöße während der Fahrt verursachte Wankbewegung der Rückenlehne (9) durch eine Kraftübertragung zwischen der Rückenlehne (9) der Sitzgelegenheit (7) und dem Verkleidungselement (10) verringert wird.

## Claims

1. Vehicle (2) comprising a lining element (10) for lining a side surface of the vehicle interior in the region of a backrest (9) of a seating unit (7), wherein the lining element (10) is connected to a body structure of the vehicle (2) by means of at least a first supporting element (12), a second supporting element (14) and a third supporting element (16), wherein the three supporting elements (12, 14, 16) span a triangle and the lining element (10) has a reinforcing structure (20) in a region between the three supporting elements (12, 14, 16), **characterized in that** the upper side of the backrest (9) extends at least partially in the triangle in a projection of the backrest (9) onto the lining element (10).

2. Vehicle (2) according to the preceding claim, **characterized in that** the lining element (10) is designed as a lining element (10) for a B column or a C column (11) of the vehicle.

3. Vehicle (2) according to one of the preceding claims, **characterized in that** the reinforcing structure (20) extends at least partially in a plane spanned by the three supporting elements (12, 14, 16).

4. Vehicle (2) according to one of the preceding claims, **characterized in that** the reinforcing structure (20) is designed to increase the force that can be absorbed elastically by the lining element (10) perpendicularly to an inner surface of the lining element (10).

5. Vehicle (2) according to one of the preceding claims, **characterized in that** the reinforcing structure (20) has honeycombs and/or ribs (24) and/or a lattice structure.

6. Vehicle (2) according to one of the preceding claims, **characterized in that** the reinforcing structure (20) causes the lining element (10) to be stiffened in a direction from the top front to the bottom rear as seen in the direction of travel.

7. Vehicle (2) according to one of the preceding claims, **characterized in that** the reinforcing structure consists of ribs (24) that, in the state installed in the vehicle (2), form an angle with the horizontal of between 30° and 60°, preferably between 40° and 50°.

8. Vehicle (2) according to one of the preceding claims, **characterized in that** a swaying movement of the backrest (9) caused by a transverse acceleration of the vehicle (2) and/or by impacts during travel is reduced by a force transmission between the backrest (9) of the seating unit (7) and the lining element (10).

## Revendications

1. Véhicule (2) comprenant un élément d'habillage (10) destiné à habiller une surface latérale de l'habitacle de véhicule dans la zone d'un dossier (9) d'un siège (7), dans lequel l'élément d'habillage (10) est relié à une structure de carrosserie du véhicule (2) au moyen d'au moins un premier élément support (12), d'un deuxième élément support (14) et d'un troisième élément support (16), dans lequel les trois éléments supports (12, 14, 16) définissent un triangle et l'élément d'habillage (10) présente une structure de renforcement (20) dans une zone entre les trois éléments supports (12, 14, 16), **caractérisé en ce que** dans une projection du dossier (9) sur l'élément d'habillage (10), le côté supérieur du dossier (9) s'étend au moins partiellement dans le triangle.

2. Véhicule (2) selon la revendication précédente, **caractérisé en ce que** l'élément d'habillage (10) est conçu comme un élément d'habillage (10) pour un pilier B ou un pilier C (11) du véhicule.

3. Véhicule (2) selon l'une quelconque des revendications précédentes, **caractérisé en ce que** la structure de renforcement (20) s'étend au moins partiellement dans un plan défini par les trois éléments supports (12, 14, 16).

4. Véhicule (2) selon l'une quelconque des revendications précédentes, **caractérisé en ce que** la structure de renforcement (20) est conçue pour accroître la force pouvant être absorbée élastiquement par l'élément d'habillage (10) perpendiculairement à une surface interne de l'élément d'habillage (10).

5. Véhicule (2) selon l'une quelconque des revendications précédentes, **caractérisé en ce que** la structure de renforcement (20) présente des nids d'abeille et/ou des nervures (24) et/ou une structure réticulaire.

6. Véhicule (2) selon l'une quelconque des revendications précédentes, **caractérisé en ce que** la structure de renforcement (20) provoque un raidissement de l'élément d'habillage (10) dans une direction de l'avant-haut vers l'arrière-bas vue dans la direction de conduite.

7. Véhicule (2) selon l'une quelconque des revendications précédentes, **caractérisé en ce que** la structure de renforcement est constituée de nervures (24), qui, dans l'état montées dans le véhicule (2) forment avec l'horizontale un angle entre 30° et 60°, de préférence entre 40° et 50°.

8. Véhicule (2) selon l'une quelconque des revendications précédentes, **caractérisé en ce qu'un** mouvement de roulis du dossier (9) entraîné par une accélération latérale du véhicule (2) et/ou par des chocs pendant la conduite est réduit par une transmission de force entre le dossier (9) du siège (7) et l'élément d'habillage (10).
